# EUROPEAN PATENT SPECIFICATION

(11) **EP 4 214 095 B1**
(45) Date of publication and mention of the grant of the patent: **27.11.2024**
(21) Application number: 21777509.7
(22) Date of filing: 14.09.2021
(51) Int. Cl.: B60R 19/18, B60R 19/34

(54) **BUMPER SYSTEM FOR AN AUTOMOTIVE VEHICLE**
STOSSFÄNGERSYSTEM FÜR EIN KRAFTFAHRZEUG
SYSTÈME DE PARE-CHOCS POUR UN VÉHICULE AUTOMOBILE

(30) Priority: 15.09.2020 NL 2026470
(43) Date of publication of application: 26.07.2023
(73) Proprietor: Lightyear IPCo B.V., 5708 JZ Helmond (NL)
(72) Inventor: POTKAMP, Storm, 6836 TR ARNHEM (NL)
(74) Representative: EP&C
(86) International application number: PCT/EP2021/075224
(87) International publication number: WO 2022/058305

(56) References cited:
- EP-A1- 3 626 545
- WO-A2-2013/114213
- CA-A1- 2 803 592
- DE-A1- 102015 200 359
- FR-A1- 2 999 998
- US-A1- 2013 154 285
- US-B1- 6 308 999
- US-B1- 9 499 209

## Description

### FIELD OF THE INVENTION

The invention relates to a bumper system for an automotive vehicle and to an automotive vehicle comprising said bumper system.

The project leading to this application has received funding from the European Union's Horizon 2020 research and innovation program under grant agreement No. 848620.

### BACKGROUND OF THE INVENTION

When an automotive vehicle comes into contact with an external object, for example another automotive vehicle, the external object and/or the automotive vehicle will be damaged. Generally the automotive vehicle is damaged. In order to limit damage the automotive vehicle usually comprises a bumper system at a distal end thereof, i.e. front and/or rear end.

For automotive collisions a distinction is made between a low speed collision and a high speed collision. In this case a collision is considered low speed up to 15 km/h and collisions at speeds higher than 15 km/h are considered high speed. During a low speed collision the main concern is to reduce the damage to the vehicle, while for a high speed collision the main concern is the safety of the occupants.

The present invention is aimed at reducing damage to an automotive vehicle in a low speed collision. Said aim is particularly relevant for expensive automotive vehicles, as repair costs tend to be expensive as well. Expensive automotive vehicles are for example automotive vehicles comprising solar panels.

Vehicles that are at least partly charged by solar power comprise solar panels that are provided on the upper surface of the automotive vehicle and are for charging one or more battery packs of the automotive vehicle. The battery packs provide at least part of the required energy for driving the automotive vehicle. In order to maximize the solar charging capacity there is a need to maximize the solar panel area on the upper surface of the automotive vehicle. The solar panel area is related to the amount of kilometres that can be driven on only the sun annually, wherein a larger solar panel area means more annual solar kilometres. Because the solar panels are an expensive component, damage to the solar panels in a low speed collision should be prevented.

US 9 499 209 B1 discloses an automotive vehicle with a large solar activated structure on an outer vehicle body panel, such as a trunk lid, hood, bumper and other vehicle panels.

FR2999998A1 discloses a shock absorbing structure for a vehicle comprising a side sill comprising two chassis frame side members which together support a bumper beam, said shock absorbing structure comprising said bumper beam and an absorber interposed between each chassis frame side member and said bumper beam, said absorber having a working part intended to deform in the event of an impact under the effect of a load below the limit load beyond which said chassis frame side member undergoes plastic deformation, said absorber being a section piece of which one end is inserted inside the open end of said chassis frame side member and fixed thereto.

### OBJECT OF THE INVENTION

It is an object of the invention to provide an automotive vehicle which suffers less damage in a low speed collision.

It is another object of the invention to provide an automotive vehicle able to travel more annual solar kilometres.

### SUMMARY OF THE INVENTION

In order to achieve at least one object, an automotive vehicle is provided comprising:
- a distal end,
- at least one crash rail extending in a longitudinal direction of the vehicle towards the distal end, the crash rail comprising a free end,
- a bumper system provided at the distal end, wherein the bumper system is configured to limit damage to the automotive vehicle in a low speed collision with an object at the distal end by absorbing a collision energy, wherein the bumper system comprises
   ∘ a bumper beam extending substantially perpendicular to a longitudinal axis of the automotive vehicle,
   ∘ at least one crash box extending substantially parallel to the longitudinal axis of the automotive vehicle, the at least one crash box comprising a first end and an opposite second end, wherein the first end is connected to the bumper beam, and wherein the second end is connected to the free end of the at least one crash rail of the automotive vehicle,
   wherein the bumper beam is configured to absorb at least 35%, preferably at least 40%, more preferably at least 45% of the collision energy in an RCAR low-speed structural crash test, and wherein the at least one crash box is configured to absorb at least 35%, preferably at least 40%, more preferably at least 45% of the collision energy in the RCAR low-speed structural crash test for limiting a maximum intrusion distance of the object.

RCAR stands for Research Council for Automobile Repairs, hereafter RCAR. The RCAR low-speed structural crash test is a widely used test used for determining damage to an automotive vehicle.

The bumper system of the automotive vehicle is configured to limit the maximum intrusion distance of the object. By limiting the maximum intrusion distance a larger part of the automotive vehicle remains undamaged during the low-speed collision. This reduces the damage cost, and increases the space available for e.g. the trunk and, in the case of a vehicle comprising solar panels, the available area for these solar panels. This is beneficial for expensive automotive vehicles, as the limited intrusion distance will result in less damage compared to a higher intrusion distance.

This is in particular beneficial for automotive vehicles having solar panels on an upper surface thereof. By limiting the maximum intrusion distance, a larger upper surface area of the automotive vehicle may be used for providing solar panels without damaging them in a low speed collision. In turn, providing more solar panels will increase the amount of annual solar kilometres.

The maximum intrusion distance is reduced by having the bumper beam absorb at least 35%, preferably at least 40%, more preferably at least 45% of the collision energy. In known bumper systems comprising a bumper beam and at least one crash box the bumper beam is configured to absorb less than 35% of the collision energy, wherein the at least one crash box is configured to absorb at least 65% of the collision energy in a 15 km/h collision.

As the bumper beam absorbs a higher amount of the collision energy, the crash boxes may absorb less. Hence, the crash boxes may be shorter. The shorter crash boxes provide a shorter bumper system in the longitudinal direction. A shorter bumper system may provide more room for for example the trunk of the automotive vehicle.

According to the invention the automotive vehicle comprises a chassis, wherein an outer body work is provided on the chassis, the outer body work comprising an upper surface comprising at least one solar panel.

According to the invention of the automotive vehicle, in the low speed collision the maximum intrusion distance along the distal end defines a maximum intrusion line extending substantially parallel to the distal end at a distance thereof, wherein in top view the at least one solar panel extends from the maximum intrusion line away from the distal end.

According to the invention of the automotive vehicle, the at least one crash rail is connected at the free end thereof to the second end of the at least one crash box and at an opposite end thereof to the chassis, wherein in top view the at least one solar panel extends from the free end of the at least one crash rail away from the distal end.

In an embodiment of the automotive vehicle, the bumper system comprises two crash boxes which are located at a distance from each other in a direction substantially perpendicular to the longitudinal axis of the automotive vehicle.

In an embodiment of the automotive vehicle, the at least one crash box comprises a hollow beam, wherein an internal volume of the hollow beam comprises an aluminium foam fill.

The aluminium foam fill increases the energy that can be absorbed by the crash box, thereby decreasing the intrusion distance. An advantage of the foam fill is that the length of the crash box may be decreased, because the same energy can be absorbed by a shorter crash box. Hence, leaving more room available for e.g. the trunk, or solar panels.

In an embodiment of the automotive vehicle, the hollow beam has a wall thickness between 1 - 3 mm. Said thickness is relatively high, increasing the energy that can be absorbed by the crash box, while maintaining a simple construction.

In an embodiment of the automotive vehicle, the bumper beam and/or the at least one crash box are made from a material comprising aluminium.

In an embodiment of the automotive vehicle, in cross-sectional view the bumper beam has a fill ratio of at least 25%.

In an embodiment of the automotive vehicle, the bumper beam has a wall thickness between 3 - 5 mm. Said thickness is relatively high, increasing the energy that can be absorbed by the bumper beam, while maintaining a simple construction.

In an embodiment of the automotive vehicle, the bumper beam is curved in top view.

In an embodiment of the automotive vehicle, the bumper beam has a length, wherein the length is equal to or greater than a distance between two crash boxes and at least smaller than or equal to a distal width of the distal end of the automotive vehicle.

In an embodiment of the automotive vehicle, the bumper beam and the at least crash box are configured to absorb the collision energy by plastic deformation thereof.

### BRIEF DESCRIPTION OF THE FIGURES

Embodiments of the system and the method will be described by way of example only, with reference to the accompanying schematic drawings in which corresponding reference symbols indicate corresponding parts, and in which:
Figure 1 schematically shows a top view of an embodiment of an automotive vehicle according to the invention comprising an embodiment of a bumper system according to the invention.
Figure 2A schematically shows a top view of an RCAR low-speed structural crash test set up.
Figure 2B schematically shows a side view of the RCAR low-speed structural crash test set up.
Figure 3A-3C schematically show top views of different phases during the RCAR low-speed structural crash test.
Figure 4 schematically shows a cross-sectional top view of a distal end of an automotive vehicle comprising an embodiment of a bumper system according to the invention, in particular showing a maximum intrusion distance.
Figure 5 schematically shows a perspective view of an embodiment of a bumper system according to the invention.
Figure 6 schematically shows a perspective view of the bumper system of figure 5 connected to crash rails.
Figure 7 schematically shows a cross-section of an embodiment of a bumper beam of a bumper system according to the invention
Figure 8 schematically shows a cross-section of an embodiment of a crash box of a bumper system according to the invention.

### DETAILED DESCRIPTION OF THE FIGURES

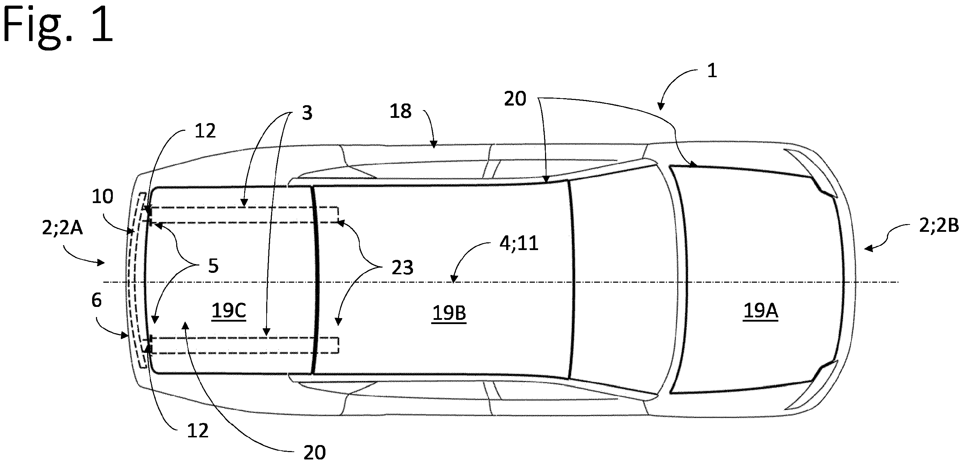

Turning to figure 1 an automotive vehicle 1 is shown, in particular an automotive vehicle for transporting at least one person. The automotive vehicle 1 comprises a distal end 2. In the shown figure the rear end 2A of the automotive vehicle 1 is the distal end 2. The front end 2B of the automotive vehicle 1 may also be the distal end 2.

At least one crash rail 3, here two crash rails 3, extends in a longitudinal direction 4 of the vehicle 1 towards the distal end 2. The crash rail 3 comprises a free end 5. At an opposite end 23 thereof the crash rail 3 is connected to a chassis (not shown) of the automotive vehicle 1.

A bumper system 6 is provided at the distal end 2. The bumper system 6 is configured to limit damage to the automotive vehicle 1 in a low speed collision 7 with an object 8 at the distal end 2 by absorbing a collision energy.

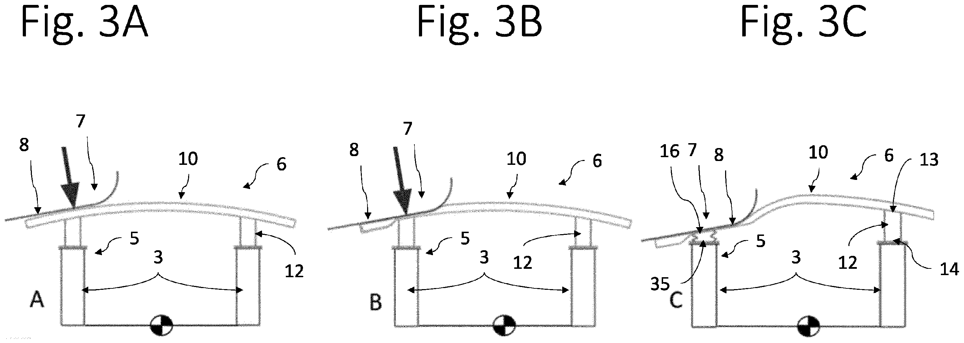

The bumper system 6 comprises a bumper beam 10 extending substantially perpendicular to a longitudinal axis 11 of the automotive vehicle 1. The bumper system 6 further comprises at least one crash box 12, here two crash boxes 12, extending substantially parallel to the longitudinal axis 11 of the automotive vehicle 1. The crash box 12 comprises a first end 13 and an opposite second end 14, see figure 3C. The first end 13 is connected to the bumper beam 10. The second end 14 is connected to the free end 5 of the at least one crash rail 3 of the automotive vehicle 1.

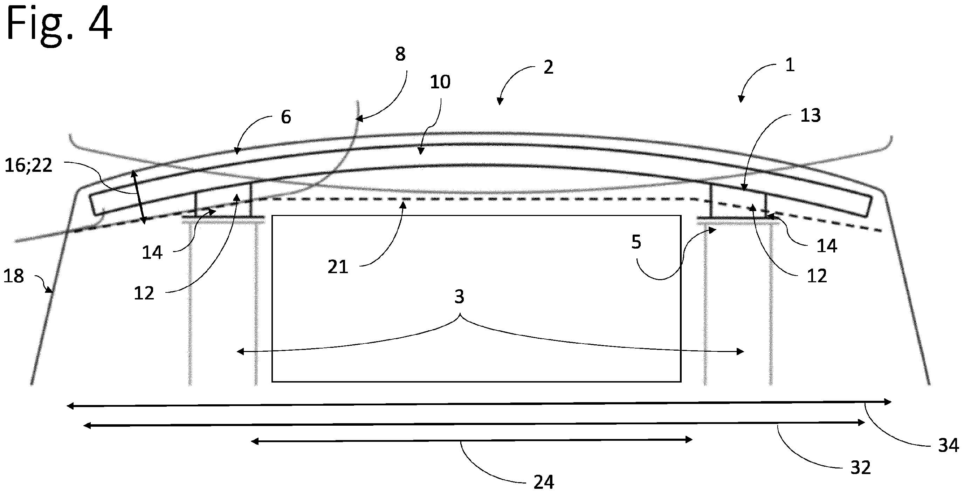

The two crash boxes 12 are located at a distance 24 from each other in a direction substantially perpendicular to the longitudinal axis 11 of the automotive vehicle 1, see figure 4.

The bumper beam 10 is configured to absorb at least 35%, preferably at least 40%, more preferably at least 45% of the collision energy in an RCAR low-speed structural crash test. The at least one crash box 12 is configured to absorb at least 35%, preferably at least 40%, more preferably at least 45% of the collision energy in the RCAR low-speed structural crash test 15 for limiting a maximum intrusion distance 16 of the object 8.

An outer body work 18 is provided on the chassis. The outer body work 18 comprises an upper surface 19 comprising at least one solar panel 20. In the shown embodiment the front upper surface 19A, mid upper surface 19B and rear upper surface 19C comprise solar panels 20.

The bumper system 6 is located within a volume enclosed by the outer body work 18, as can be seen in the top view of figure 1.

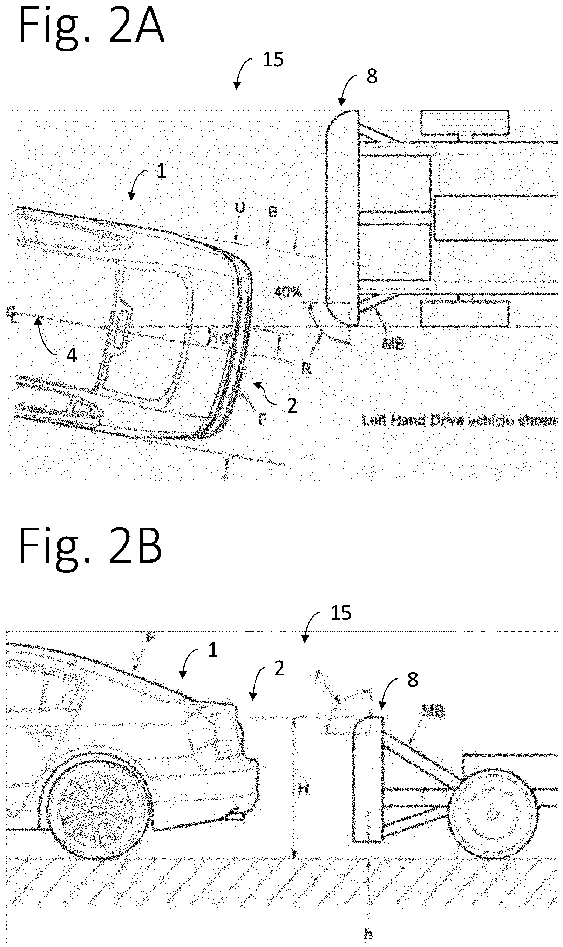

Turning to figures 2 and 3 the RCAR low-speed structural crash test 15 is schematically shown. The figures 2 and 3 are taken from the RCAR low-speed structural crash test protocol, Appendix 2, Issue 2.2 from July 2011.

Figures 2A and 2B show respective top and side views of an automotive vehicle 1 undergoing the RCAR low-speed structural crash test 15 prior to collision. The automotive vehicle 1 will collide with an external object 8 at a speed of 15 km/h. This is considered low speed, wherein the crash rail 3 is configured to remain intact.

The automotive vehicle 1 will collide under an angle of 10 degrees relative to the longitudinal axis 11 of the automotive vehicle 1 with the external object 8.

Figures 3A to 3C schematically show different moments during the deformation. Figure 3A shows the situation just before impact with the bumper beam, wherein an external object 8 is located adjacent the bumper beam 10 of the bumper system 6. The outer body work 18 is not shown.

Figure 3B shows the situation wherein a section, in particular an outer section of the bumper beam 10 is fully crushed.

Figure 3C shows the situation wherein the bumper beam 10 and the crash box 12 are fully deformed. In this situation the total collision energy of the low-speed crash is absorbed, wherein the bumper beam 10 has absorbed at least 35%, preferably at least 40%, more preferably at least 45% of the collision energy, and wherein the crash box 12 has absorbed at least 35%, preferably at least 40%, more preferably at least 45% of the collision energy. As it is a low-speed structural crash test 15, the crash rail 3 is not damaged.

The bumper beam 10 and the at least one crash box 12 are configured to absorb the collision energy by plastic deformation 35 thereof, as shown in figure 3C.

Figure 4 schematically shows a cross-sectional top view of the distal end 2 of the automotive vehicle 1, wherein the bumper system 6 is shown. The low-speed crash induces a maximum intrusion distance 16 along the distal end 2. The maximum intrusion distance 16 along the distal end 2 defines a maximum intrusion line 21 extending substantially parallel to the distal end 2 at a distance 22 thereof.

The maximum intrusion line 21 extends at least partly between the free end 5 of the crash rails 3 and the distal end 2.

In top view the at least one solar panel 20 (not shown) extends from the maximum intrusion line 21 away from the distal end 2. This allows for an increased solar panel 20 area compared to having the solar panels 20 extend from the free end 5 of the crash rails 3. In the low-speed collision damage to the solar panels 20 will be prevented or at least limited, because the solar panels 20 do not extend beyond the maximum intrusion distance 16.

The at least one solar panel 20 may instead extend from the free end 5 of the at least one crash rail 3 away from the distal end 2. This configuration still allows for a large solar panel area while damage to the solar panels is further prevented, or limited.

Having a shorter maximum intrusion distance 16 allows the crash rails 3 to extend further to the distal end 2. As the trunk is generally provided from the free end 5 of the crash rails 3 towards the opposite distal end 2 the trunk size can be increased.

The bumper beam 10 has a length 32. Said length 32 is equal to or greater than a distance 24 between two crash boxes 12 and at least smaller than or equal to a distal width 34 of the distal end 2 of the automotive vehicle 1.

The bumper beam 10 is curved, when seen in top view.

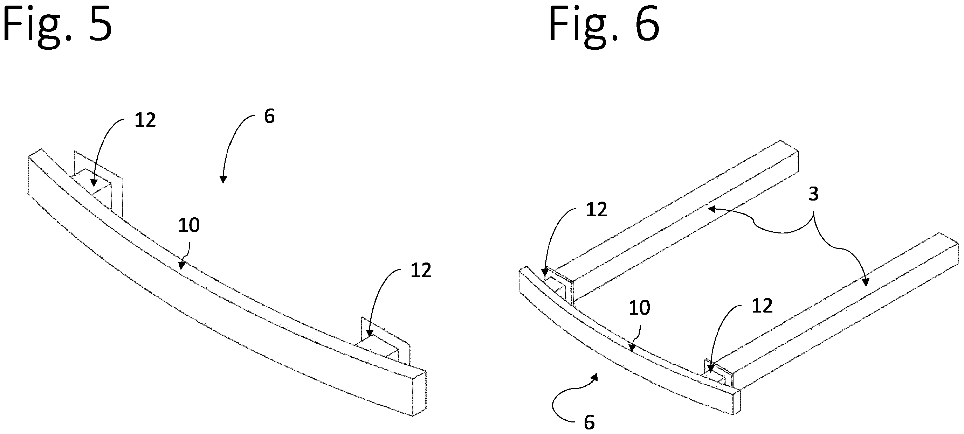

Turning to figures 5 and 6 an embodiment of the bumper system 6 is shown, wherein in figure 6 the bumper system 6 is connected to two crash rails 3.

The bumper beam 10 and/or the at least one crash box 12 may be made from a material comprising aluminium. The bumper beam 10 and/or the at least one crash box 12 may be made entirely from an aluminium alloy.

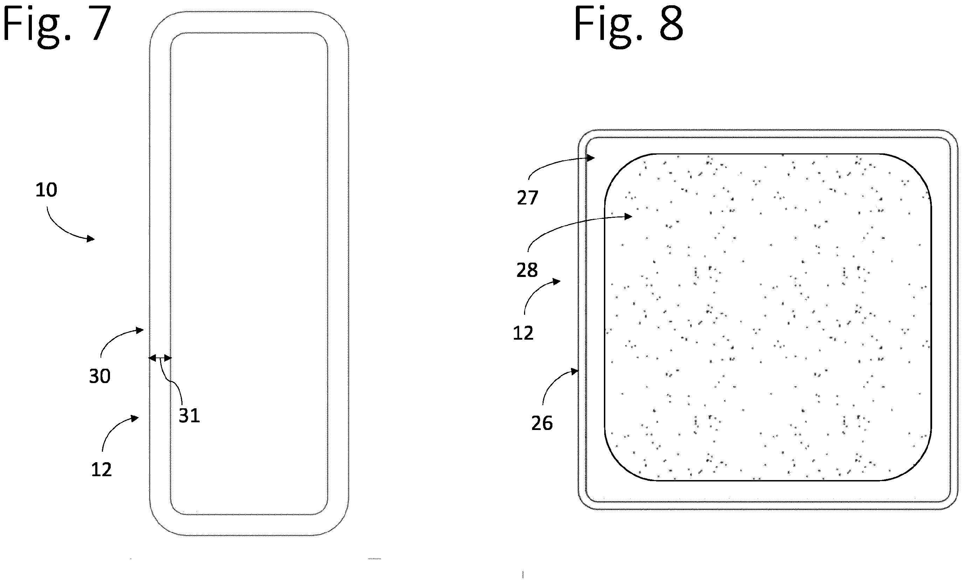

In cross-sectional view, as shown in figure 7, an embodiment of the bumper beam 10 has a fill ratio 30 of at least 25%. The fill ratio 30 is the amount of material within the outer circumference of the cross-section relative to the total cross-sectional area. A higher fill ratio 30 may increase the amount of energy that can be absorbed by the bumper beam 10. A higher fill ratio 30 may therefore assist in limiting the intrusion distance during a collision.

The bumper beam 10 may have a wall thickness 31 between 3-5 mm. This embodiment is easy to manufacture, as it does not require a complex cross-sectional profile. The fill ratio 30 may also be achieved by a more complex cross-sectional profile.

Figure 8 shows a cross-sectional view of an embodiment of the crash box 12. The crash box 12 comprises a hollow beam 26. An internal volume 27 of the hollow beam 26 comprises an aluminium foam fill 28. The aluminium foam fill 28 is shown schematically. The aluminium foam fill 28 may decrease the peak force on the crash box 12. The decreased peak force in turn allows the weight of the crash rails 3 to be lower.

The hollow beam 26 may have a wall thickness between 1 - 3 mm.

As required, detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention.

The terms "a" or "an", as used herein, are defined as one or more than one. The term another, as used herein, is defined as at least a second or more. The terms including and/or having, as used herein, are defined as comprising (i.e., open language, not excluding other elements or steps). Any reference signs in the claims should not be construed as limiting the scope of the claims or the invention.

The mere fact that certain measures are recited in mutually different dependent claims does not indicate that a combination of these measures cannot be used to advantage.

## Claims

1. Automotive vehicle (1) comprising:
- a chassis (17), wherein an outer body work (18) is provided on the chassis, the outer body work comprising an upper surface (19) comprising at least one solar panel (20),
- a distal end (2),
- at least one crash rail (3) extending in a longitudinal direction (4) of the vehicle towards the distal end, the crash rail comprising a free end (5),
- a bumper system (6) provided at the distal end, wherein the bumper system is configured to limit damage to the automotive vehicle in a low speed collision (7) by absorbing a collision energy, wherein the bumper system comprises
∘ a bumper beam (10) extending substantially perpendicular to a longitudinal axis (11) of the automotive vehicle,
∘ at least one crash box (12) extending substantially parallel to the longitudinal axis of the automotive vehicle, the at least one crash box comprising a first end (13) and an opposite second end (14), wherein the first end is connected to the bumper beam, and wherein the second end is connected to the free end of the at least one crash rail of the automotive vehicle,
wherein the bumper beam is configured to absorb at least 35%, preferably at least 40%, more preferably at least 45% of the collision energy in an RCAR low-speed structural crash test (15), and wherein the at least one crash box is configured to absorb at least 35%, preferably at least 40%, more preferably at least 45% of the collision energy in the RCAR low-speed structural crash test for limiting a maximum intrusion distance (16) of the object,
wherein
in the low speed collision the maximum intrusion distance along the distal end defines a maximum intrusion line (21) extending substantially parallel to the distal end at a distance (22) thereof, wherein in top view the at least one solar panel extends from the maximum intrusion line away from the distal end,
and/or wherein
the at least one crash rail is connected at the free end thereof to the second end of the at least one crash box and at an opposite end (23) thereof to the chassis, wherein in top view the at least one solar panel extends from the free end of the at least one crash rail away from the distal end.

2. Automotive vehicle according to any one of the preceding claims, wherein the bumper system comprises two crash boxes which are located at a distance (24) from each other in a direction substantially perpendicular to the longitudinal axis of the automotive vehicle.

3. Automotive vehicle according to any one of the preceding claims, wherein the at least one crash box comprises a hollow beam (26), wherein an internal volume (27) of the hollow beam comprises an aluminium foam fill (28).

4. Automotive vehicle according to the preceding claim, wherein the hollow beam has a wall thickness (29) between 1 - 3 mm.

5. Automotive vehicle according to any one of the preceding claims, wherein the bumper beam and/or the at least one crash box are made from a material comprising aluminium.

6. Automotive vehicle according to any one of the preceding claims, wherein in cross-sectional view the bumper beam has a fill ratio (30) of at least 25%.

7. Automotive vehicle according to any one of the preceding claims, wherein the bumper beam has a wall thickness (31) between 3-5 mm.

8. Automotive vehicle according to any one of the preceding claims, wherein the bumper beam is curved in top view.

9. Automotive vehicle according to any one of the preceding claims 2-8, wherein the bumper beam has a length (32), wherein the length is equal to or greater than a distance (24) between two crash boxes and at least smaller than or equal to a distal width (34) of the distal end of the automotive vehicle.

10. Automotive vehicle according to any one of the preceding claims, wherein the bumper beam and the at least one crash box are configured to absorb the collision energy by plastic deformation (35) thereof.

## Patentansprüche

1. Kraftfahrzeug (1), umfassend:
- ein Fahrgestell (17), wobei eine äußere Karosserie (18) auf dem Fahrgestell vorgesehen ist, wobei die äußere Karosserie eine obere Fläche (19) mit mindestens einem Solarmodul (20) umfasst,
- ein fern gelegenes Ende (2),
- mindestens eine Crashschiene (3), die sich in Längsrichtung (4) des Fahrzeugs zum fern gelegenen Ende hin erstreckt, wobei die Crashschiene ein freies Ende (5) aufweist,
- ein Stoßfängersystem (6), das am fern gelegenen Ende vorgesehen ist, wobei das Stoßfängersystem dazu ausgelegt ist, Schäden am Kraftfahrzeug bei einer Kollision mit niedriger Geschwindigkeit (7) durch Absorption einer Kollisionsenergie zu begrenzen, wobei das Stoßfängersystem umfasst:
o einen Stoßfängerträger (10), der sich im Wesentlichen rechtwinklig zu einer Längsachse (11) des Kraftfahrzeugs erstreckt,
o mindestens eine Crashbox (12), die sich im Wesentlichen parallel zur Längsachse des Kraftfahrzeugs erstreckt, wobei die mindestens eine Crashbox ein erstes Ende (13) und ein gegenüberliegendes zweites Ende (14) umfasst, wobei das erste Ende mit dem Stoßfängerträger verbunden ist und wobei das zweite Ende mit dem freien Ende der mindestens einen Crashschiene des Kraftfahrzeugs verbunden ist,
wobei der Stoßfängerträger dazu ausgelegt ist, bei einem RCAR-Strukturcrashtest bei niedriger Geschwindigkeit (15) mindestens 35 %, vorzugsweise mindestens 40 %, besonders bevorzugt mindestens 45 % der Kollisionsenergie zu absorbieren und wobei die mindestens eine Crashbox dazu ausgelegt ist, bei dem RCAR-Strukturcrashtest bei niedriger Geschwindigkeit mindestens 35 %, vorzugsweise mindestens 40 %, besonders bevorzugt mindestens 45 % der Kollisionsenergie zu absorbieren, um eine maximale Eindringtiefe (16) des Objekts zu begrenzen,
wobei
bei der Kollision mit niedriger Geschwindigkeit die maximale Eindringtiefe entlang des fern gelegenen Endes eine maximale Eindringlinie (21) definiert, die sich im Wesentlichen parallel zum fern gelegenen Ende in einem Abstand (22) davon erstreckt, wobei sich in der Draufsicht das mindestens eine Solarmodul von der maximalen Eindringlinie weg vom fern gelegenen Ende erstreckt,
und/oder wobei
die mindestens eine Crashschiene an ihrem freien Ende mit dem zweiten Ende der mindestens einen Crashbox und an einem gegenüberliegenden Ende (23) mit dem Fahrgestell verbunden ist, wobei sich in der Draufsicht das mindestens eine Solarmodul vom freien Ende der mindestens einen Crashschiene weg vom fern gelegenen Ende erstreckt.

2. Kraftfahrzeug nach einem der vorhergehenden Ansprüche, wobei das Stoßfängersystem zwei Crashboxen umfasst, die in einer Richtung im Wesentlichen rechtwinklig zur Längsachse des Kraftfahrzeugs in einem Abstand (24) voneinander angeordnet sind.

3. Kraftfahrzeug nach einem der vorhergehenden Ansprüche, wobei die mindestens eine Crashbox einen Hohlträger (26) umfasst, wobei ein Innenvolumen (27) des Hohlträgers eine Aluminiumschaumfüllung (28) umfasst.

4. Kraftfahrzeug nach dem vorhergehenden Anspruch, wobei der Hohlträger eine Wandstärke (29) zwischen 1 - 3 mm aufweist.

5. Kraftfahrzeug nach einem der vorhergehenden Ansprüche, wobei der Stoßfängerträger und/oder die mindestens eine Crashbox aus einem Material hergestellt sind, das Aluminium umfasst.

6. Kraftfahrzeug nach einem der vorhergehenden Ansprüche, wobei der Stoßfängerträger im Querschnitt ein Füllverhältnis (30) von mindestens 25 % aufweist.

7. Kraftfahrzeug nach einem der vorhergehenden Ansprüche, wobei der Stoßfängerträger eine Wandstärke (31) zwischen 3 - 5 mm aufweist.

8. Kraftfahrzeug nach einem der vorhergehenden Ansprüche, wobei der Stoßfängerträger in der Draufsicht gekrümmt ist.

9. Kraftfahrzeug nach einem der vorhergehenden Ansprüche 2-8, wobei der Stoßfängerträger eine Länge (32) aufweist, wobei die Länge gleich oder größer als ein Abstand (24) zwischen zwei Crashboxen und mindestens kleiner oder gleich einer fern gelegenen Breite (34) des fern gelegenen Endes des Kraftfahrzeugs ist.

10. Kraftfahrzeug nach einem der vorhergehenden Ansprüche, wobei der Stoßfängerträger und die mindestens eine Crashbox dazu ausgelegt sind, die Kollisionsenergie durch plastische Verformung (35) davon zu absorbieren.

## Revendications

1. Véhicule automobile (1) comprenant :
- un châssis (17), une carrosserie extérieure (18) étant placée sur le châssis, la carrosserie extérieure comprenant une surface supérieure (19) comportant au moins un panneau solaire (20),
- une extrémité distale (2),
- au moins une barre de collision (3) s'étendant dans une direction longitudinale (4) du véhicule vers l'extrémité distale, la barre de collision comprenant une extrémité libre (5),
- un système de pare-chocs (6) situé au niveau de l'extrémité distale, le système de pare-chocs étant conçu pour limiter les dommages au véhicule automobile lors d'une collision à faible vitesse (7) en absorbant l'énergie de la collision, le système de pare-chocs comprenant
O une poutre de pare-chocs (10) s'étendant sensiblement perpendiculairement à un axe longitudinal (11) du véhicule automobile,
O au moins une boîte-tampon (12) s'étendant sensiblement parallèlement à l'axe longitudinal du véhicule automobile, l'au moins une boîte-tampon comprenant une première extrémité (13) et une seconde extrémité (14) opposée, la première extrémité étant reliée à la poutre de pare-chocs, et la seconde extrémité étant reliée à l'extrémité libre de l'au moins une barre de collision du véhicule automobile,
la poutre de pare-chocs étant conçue pour absorber au moins 35 %, de préférence au moins 40 %, de préférence encore au moins 45 % de l'énergie de collision dans un essai de collision structural à faible vitesse RCAR (15), et l'au moins une boîte-tampon étant conçue pour absorber au moins 35 %, de préférence au moins 40 %, de préférence encore au moins 45 % de l'énergie de collision dans l'essai de collision structural à faible vitesse RCAR afin de limiter une distance d'intrusion maximale (16) de l'objet,
dans la collision à faible vitesse, la distance d'intrusion maximale le long de l'extrémité distale définissant une ligne d'intrusion maximale (21) s'étendant sensiblement parallèlement à l'extrémité distale à une distance (22) de celle-ci, en vue de dessus, l'au moins un panneau solaire s'étendant à partir de la ligne d'intrusion maximale à l'opposé de l'extrémité distale,
et/ou
l'au moins une barre de collision étant reliée au niveau de son extrémité libre à la seconde extrémité de l'au moins une boîte-tampon et au niveau de son extrémité opposée (23) au châssis, en vue de dessus, l'au moins un panneau solaire s'étendant à partir de l'extrémité libre de l'au moins une barre de collision à l'opposé de l'extrémité distale.

2. Véhicule automobile selon l'une quelconque des revendications précédentes, le système de pare-chocs comprenant deux boîtes-tampons situées à une certaine distance (24) l'une de l'autre dans une direction sensiblement perpendiculaire à l'axe longitudinal du véhicule automobile.

3. Véhicule automobile selon l'une quelconque des revendications précédentes, l'au moins une boîte-tampon comprenant une poutre creuse (26), un volume interne (27) de la poutre creuse comprenant un remplissage en mousse d'aluminium (28).

4. Véhicule automobile selon la revendication précédente, la poutre creuse présentant une épaisseur de paroi (29) comprise entre 1 et 3 mm.

5. Véhicule automobile selon l'une quelconque des revendications précédentes, la poutre de pare-chocs et/ou l'au moins une boîte-tampon étant fabriquées dans un matériau comprenant de l'aluminium.

6. Véhicule automobile selon l'une quelconque des revendications précédentes, en vue en coupe transversale, la poutre de pare-chocs présentant un taux de remplissage (30) d'au moins 25 %.

7. Véhicule automobile selon l'une quelconque des revendications précédentes, la poutre de pare-chocs présentant une épaisseur de paroi (31) comprise entre 3 et 5 mm.

8. Véhicule automobile selon l'une quelconque des revendications précédentes, la poutre de pare-chocs étant incurvée en vue de dessus.

9. Véhicule automobile selon l'une quelconque des revendications précédentes 2 à 8, la poutre de pare-chocs ayant une longueur (32), la longueur étant égale ou supérieure à une distance (24) entre deux boîtes-tampons et au moins inférieure ou égale à une largeur distale (34) de l'extrémité distale du véhicule automobile.

10. Véhicule automobile selon l'une quelconque des revendications précédentes, la poutre de pare-chocs et l'au moins une boîte-tampon étant conçues pour absorber l'énergie de la collision par sa déformation plastique (35).
